# DEMANDE DE BREVET EUROPEEN

(11) **EP 1 031 454 A1**
(43) Date de publication de la demande: **30.08.2000**
(21) Numéro de dépôt: 00400514.6
(22) Date de dépôt: 25.02.2000
(51) Int. Cl.: B60K 31/00, B60T 7/04

(54) **Dispositif d'activation d'un système de régulation automatique d'allure de véhicule automobile**

(30) Priorité: 26.02.1999 FR 9902441
(71) Demandeur: THOMSON-CSF, 75008 Paris (FR)
(72) Inventeur: Artis, Jean-Paul, THOMSON-CSF Propriété Intel., 94117 Arcueil Cedex (FR); Callac, Maurice, THOMSON-CSF Propriété Intel., 94117 Arcueil Cedex (FR)
(74) Mandataire: Lucas, Laurent Jacques

(57) **Abrégé**

La présente invention concerne un dispositif d'activation d'un système de régulation automatique d'allure de véhicule automobile.

Le dispositif comporte des moyens (1, 2, 5) de détection de la pose du pied du conducteur sur la pédale de frein et des moyens d'élaboration d'un ordre d'activation à partir de la détection de la pose du pied du conducteur sur la pédale de frein (3).

L'invention s'applique notamment pour des véhicules équipés de moyens de contrôle de distance et/ou de vitesse d'obstacles situés sur la trajectoire du véhicule et dont l'allure est régulée en fonction des informations de distances et/ou des vitesses fournies par lesdits moyens. Plus généralement, elle s'applique à tous véhicules équipés de moyens de régulation automatique de leur allure.

## Description

La présente invention concerne un dispositif d'activation d'un système de régulation automatique d'allure de véhicule automobile. Elle s'applique notamment pour des véhicules équipés de moyens de contrôle de distance et/ou de vitesse d'obstacles situés sur la trajectoire du véhicule, et dont l'allure est régulée en fonction des informations de distances et/ou des vitesses fournies par lesdits moyens. Plus généralement, elle s'applique à tous véhicules équipés de moyens de régulation automatique de leur allure.

Il est connu d'équiper des véhicules de moyens de mesures de distance et/ou de vitesse de véhicules ou d'obstacles les précédant. Ces moyens, par exemple à base de techniques radars, permettent notamment d'effectuer une régulation automatique de vitesse des véhicules en fonction du trafic. Ils sont généralement qualifiés dans la littérature anglo-saxonne par le sigle ACC correspondant à l'expression « Automative Cruise Control ».

Ces moyens fournissent des informations qui peuvent être exploitées de différentes manières. Un cas d'exploitation simple consiste par exemple à fournir une information visuelle à suivre, au conducteur du véhicule, en cas de franchissement d'un seuil de distance de sécurité. C'est au chauffeur d'agir alors de lui-même sur le système de freinage du véhicule.

Un cas plus élaboré peut consister à mettre en oeuvre un freinage automatique par asservissement du système de freinage et/ou d'accélération du véhicule sur les informations fournies par les moyens de mesures, de façon notamment à régler l'allure du véhicule en fonction du trafic. Dans ce cas, le conducteur n'a pas directement la maîtrise de l'allure du véhicule. La régulation d'allure du véhicule est alors automatique, par un système qui agit sur la commande du freinage et de l'accélération du véhicule.

Dans le cas par exemple de régulation automatique d'allure couplée à un capteur ou radar du type ACC, deux modes automatiques peuvent être utilisés pour le véhicule.

Un premier mode, qui peut être qualifié de croisière, peut par exemple être utilisé pour des vitesses de véhicule supérieures à une vitesse donnée, par exemple 40 km/h. Les commandes utilisées par le conducteur du véhicule sont alors dans ce mode, une commande de marche-arrêt du système, une commande pour enclencher le système et éventuellement la pédale de frein qui désactive le système. Les commandes sont de type manuel, sous forme par exemple de boutons poussoirs.

Un deuxième mode, qui peut être qualifié d'arrêt-marche ou encore « stop and go » peut par exemple être utilisé pour les vitesses inférieures à la vitesse donnée précitée. Les mêmes commandes que celles du mode de croisière sont utilisées.

Le mode de croisière est particulièrement adapté à un environnement autoroutier ou de voie rapide, où seuls les véhicules en mouvement sont pris en compte par le capteur. Il n'y a notamment pas de détection des véhicules arrêtés. La fonction principale du capteur consiste notamment à acquérir un véhicule cible ayant une vitesse absolue plus faible que la vitesse de consigne du véhicule porteur du capteur, et à suivre ce véhicule cible à une distance calculée à partir du temps de réaction prédéterminé du conducteur tant que ce véhicule se trouve dans la même voie que le porteur. Le temps de réaction supposé du conducteur peut être fixe ou réglable. La distance de sécurité ainsi calculée est généralement compatible avec un freinage ou une accélération entièrement automatique. L'appui sur la pédale de frein désactive par exemple le système de régulation d'allure automatique. Il faut alors une intervention volontaire du conducteur, par exemple par une commande manuelle, pour ré-enclencher le système de régulation automatique d'allure.

Le mode « arrêt-marche » concerne à la fois la détection des véhicules en mouvement et des véhicules arrêtés. Le principe de fonctionnement est identique à celui du mode de croisière, c'est-à-dire réguler l'allure du véhicule porteur du capteur en fonction de l'allure du véhicule précédent. Cependant, la régulation va jusqu'à l'arrêt complet du véhicule porteur par suite de l'arrêt du véhicule précédent. La remise en marche du véhicule peut ou non être automatique. Les conditions d'utilisation sont généralement très réactives à cause notamment de la grande densité de circulation et des arrêts fréquents. Le conducteur peut alors être amené à freiner, bien qu'il utilise un mode automatique, chaque freinage désactivant par ailleurs la régulation automatique.

Il apparaît donc qu'en mode arrêt-marche, le conducteur peut être amené souvent à ré-enclencher le système de régulation automatique, sans savoir par ailleurs très bien dans quel état est le véhicule, en régulation automatique ou non. Il existe alors une double cause d'insécurité. D'une part l'attention du conducteur est accaparée par les ré-enclenchements successifs de la régulation automatique, et d'autre part il risque de ne plus savoir exactement si celle-ci est ou non activée.

Un but de l'invention est notamment de pallier cet inconvénient. A cet effet, l'invention a pour objet un dispositif d'activation d'un système de régulation automatique d'allure pour véhicule, caractérisé en ce qu'il comporte des moyens de détection de la pose du pied du conducteur sur la pédale de frein et des moyens d'élaboration d'un ordre d'activation à partir de la détection de la pose du pied du conducteur sur la pédale de frein.

L'invention a pour principaux avantages qu'elle apporte une grande sûreté de fonctionnement, qu'elle permet de gagner un temps de réaction appréciable en cas de situations difficiles qui ne peuvent être traitées par un système de conduite automatique, qu'elle permet une simplification des commandes, qu'elle est économique et qu'elle est simple à mettre en oeuvre.

D'autres caractéristiques et avantages de l'invention apparaîtront à l'aide de la description qui suit en regard des dessins annexés qui représentent :
- la figure 1, un premier exemple de réalisation possible d'un dispositif selon l'invention ;
- la figure 2, un deuxième exemple de réalisation possible d'un dispositif selon l'invention.

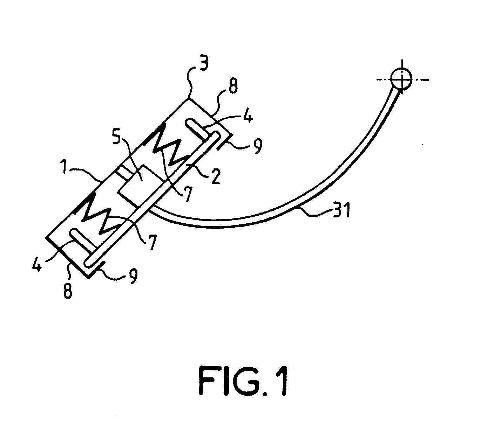

La figure 1 présente un premier exemple de réalisation possible d'un dispositif selon l'invention. Un dispositif selon l'invention comporte notamment des moyens de détection de la pose du pied du conducteur sur la pédale de frein, des moyens élaborant un signal de commande du système de conduite automatique en fonction du signal fourni par les moyens de détection. L'ordre d'activation du système est lancé lorsque la pose du pied est détectée. A cet effet, selon la figure 1, les moyens de détection comportent par exemple une partie supérieure 1 qui constitue la surface de pose de la pédale de frein, destinée au pied du conducteur. Les moyens de détection comportent par ailleurs un support 2, par exemple un plateau, qui est lié rigidement à la pédale de frein 3 du véhicule, en étant par exemple partie intégrante de la pédale de frein. Plus précisément le support 2 est lié au corps 31 de la pédale qui active le système de freinage. La partie supérieure 1 est solidaire mécaniquement du support 2, et mobile par rapport à ce dernier. Elle est maintenue dans une position d'arrêt par une force de rappel. C'est-à-dire que dans cette position, la partie supérieure 1 est sans effet. Cette force de rappel est inférieure à celle qui est associée au corps 31 de la pédale de frein 3, de sorte que lorsque le conducteur pose le pied sur la partie supérieure 1 jusqu'à une butée 4, fixe par rapport au corps de la pédale de frein, le corps 31 n'est pas activé, en restant sensiblement immobile et ne provoquant ainsi pas d'action de freinage. Le déplacement de la partie supérieure 1 par rapport au support 2 provoque un ordre d'activation du système de régulation automatique du véhicule, de préférence en mode « arrêt-marche » appelé encore « stop-and-go ». Un capteur de ce déplacement 5 transmet un ordre d'activation au système de régulation. Ainsi, la partie supérieure 1 a par exemple la forme d'une enveloppe sur laquelle se pose le pied du conducteur, cette enveloppe étant maintenue en position haute par un ou plusieurs ressorts de rappel 7 disposés entre l'intérieur de cette enveloppe et le support 2. La position haute de l'enveloppe correspond à la position arrêt. L'enveloppe est mobile entre cette position arrêt, en l'absence du pied du conducteur, et une position où elle atteint une butée 4 solidaire du support 2. En enfonçant alors l'enveloppe 1 plus en avant, le conducteur agit alors sur la pédale de frein 3 qui active elle-même le système de freinage. La force de rappel de l'enveloppe 1 est de préférence nettement inférieure à la force de rappel de la pédale de frein, pour que le pied du conducteur puisse se reposer sur l'enveloppe sans que le système de freinage soit activé par la pédale de frein. Le capteur de déplacement 5 peut être un interrupteur ou un commutateur, qui a par exemple la forme d'un bouton-poussoir. Dans ce cas, il est placé entre l'intérieur de l'enveloppe 1 et le support 2 de sorte que le déplacement de l'enveloppe active l'interrupteur ou le commutateur, en poussant par exemple le bouton-poussoir. Ce dernier, monté par exemple en série avec un circuit électrique, envoie alors un ordre d'activation au système de régulation automatique d'allure par fermeture du circuit en laissant passer un courant électrique de commande.

Pour faciliter le déplacement de l'enveloppe 1 par rapport au support 2, la partie de cette dernière qui accueille le pied du conducteur et qui est par exemple en forme de plateau, se prolonge par exemple perpendiculairement vers le support 2. Ce dernier se déplace alors entre la partie 8 ainsi prolongée. Un léger jeu est prévu entre le support 2 et cette partie 8 de façon à guider le mouvement de l'enveloppe 1. De préférence, l'enveloppe comporte une partie supplémentaire 9 qui se rabat pour couvrir plus ou moins le support, de telle sorte que le mouvement de l'enveloppe vers le haut est retenue par cette partie rabattue 9. Ainsi, le déplacement de l'enveloppe par rapport au support est limité vers le bas par la butée 4 et est limité vers le haut par la partie d'enveloppe rabattue 9.

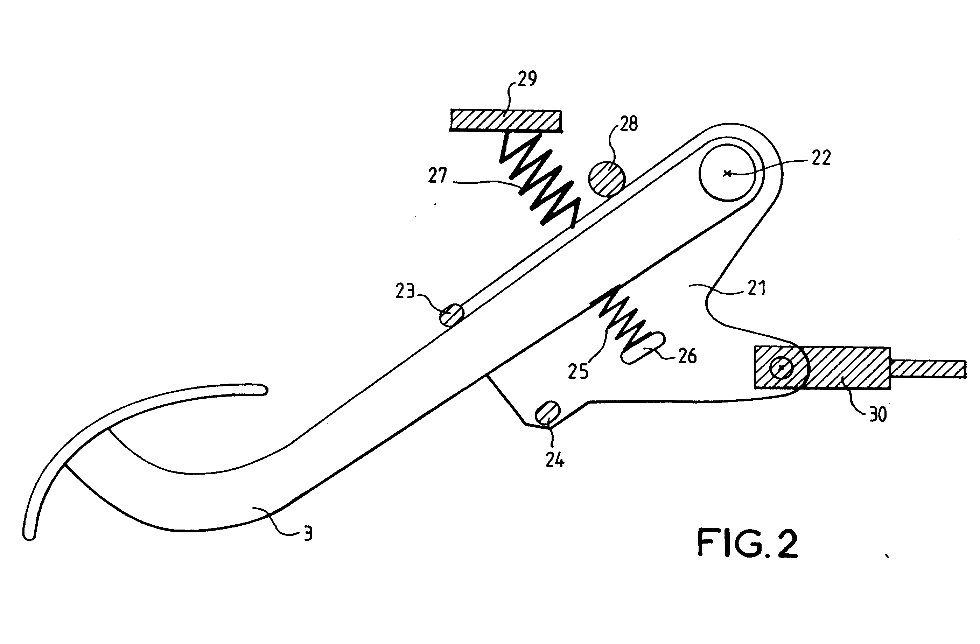

La figure 2 illustre un autre exemple de réalisation possible d'un dispositif selon l'invention. Dans cet exemple de réalisation, les moyens de détection de la pose du pied du conducteur sur la pédale de frein comportent par exemple un organe de recopie de la position angulaire de l'axe ou du corps de la pédale de frein. Cet organe peut être par exemple un capteur potentiométrique, ou encore un capteur optronique. Ce capteur de type proportionnel peut cependant encore être remplacé par un capteur de type commutateur comme illustré relativement à la figure 1. De préférence, la première zone de course de la pédale de frein, détectée par l'organe de recopie, est suivie d'une deuxième zone de course associée à une force de rappel plus importante, correspondant par exemple à la fonction de freinage de la pédale, pour offrir au conducteur une force d'appui lui permettant de poser son pied sur la pédale sans activer le freinage de son véhicule.

Ainsi, dans l'exemple de réalisation de la figure 2, les moyens de détection comportent notamment une chape 21. Cette dernière a un axe de rotation 22, commun à la pédale de frein 3. La pédale 3 a alors un degré de liberté en rotation par rapport à la chape 21. Cette dernière s'articule par exemple sur le maître cylindre 30 par une fixation à au moins un degré de liberté en rotation, par rapport à un axe perpendiculaire au plan de figure. Le mouvement de rotation de la chape 30 par rapport au maître cylindre 30 se traduit par un mouvement rectiligne de ce dernier qui est transmis aux freins par action sur le circuit hydraulique de freinage. La course de la chape vers le haut est par exemple limitée vers le haut par une butée haute 29, fixe par rapport au châssis du véhicule.

La pédale 3 est libre en rotation entre deux butées de la chape 21, une butée haute 23 et une butée basse 24. Un premier ressort de rappel 25 maintient la pédale 3 au contact de la butée haute 23, en l'absence de pression sur la pédale de frein 3, de la part du conducteur du véhicule. A cet effet, le ressort de rappel 25 est par exemple placé entre la pédale 3 et une partie 26 fixe par rapport à la chape 21, située en dessous de la pédale. Il exerce alors une force de rappel tendant à s'étendre, c'est-à-dire qu'il travaille en extension.

Un deuxième ressort de rappel 27 tend à ramener la chape 21 vers le haut, pour la maintenir au contact de la butée 28 lorsqu'elle est au repos. A cet effet, le deuxième ressort de rappel est par exemple relié d'une part à la chape 21 et à une partie 29 fixe par rapport au châssis du véhicule, le ressort travaillant alors en compression.

Un capteur, non représenté, permet de mesurer la position de la pédale 3 par rapport à la chape 21. Ce capteur est par exemple de type potentiométrique, c'est-à-dire que le déplacement de la pédale modifie la résistance d'un potentiomètre. Le capteur délivre ainsi une tension ou un courant proportionnel au déplacement. Le franchissement d'un seuil par la tension ou le courant fourni par le capteur provoque un signal d'activation, par exemple de mode « stop-and-go ». Un circuit de comparaison compare par exemple la valeur de sortie du capteur avec la valeur de seuil donnée. Cette comparaison peut être réalisée par des circuits numériques ou analogiques. Un capteur proportionnel permet par exemple dans ce cas de régler plus finement l'ordre d'activation en fonction du déplacement de la pédale de frein.

Le capteur peut aussi, comme dans la figure 1, être du type commutateur, c'est-à-dire que le passage de la pédale 3 de la butée haute 23 à la butée basse 24 provoque le changement d'état d'un commutateur. En d'autres termes, ce capteur est un commutateur électrique dont le changement d'état est provoqué par le déplacement de la chape par rapport à la pédale de frein. Ce changement d'état provoque alors un signal électrique de commande, comme indiqué par exemple relativement à la figure 1. Ce commutateur peut ainsi être du type bouton-poussoir.

Par son deuxième ressort de rappel 27, dont la force est supérieure au premier ressort de rappel 25, le dispositif selon l'invention permet par exemple à la pédale de frein de servir de repose-pied. Si le conducteur veut imposer son freinage, il enfonce alors plus fortement son pied sur la pédale de façon à provoquer le déplacement circulaire de la chape 21 qui agit elle-même sur le maître cylindre 30.

D'autres modes de réalisation selon l'invention peuvent être envisagés. En particulier, un dispositif selon l'invention comportant des moyens de détection de la pose du pied du conducteur sur la pédale de frein comme l'illustrent les figures précédentes, il est possible de prévoir d'autres moyens de détection que ceux présentés par ces figures. Il est ainsi par exemple possible de prévoir des moyens de détection comportant un capteur du type commutateur similaire au capteur de témoin de feux de stop, se déclenchant par un léger appui sur la pédale. Ce commutateur se déclenche par exemple avant celui servant à l'allumage des feux stop. La zone de léger appui se différencie par une force de rappel de la pédale que celle associée à la pédale en fonction de freinage. Le changement de zone entraîne une limite dans la course de la pédale, perceptible par le pied du conducteur. Ce qui permet au conducteur de se rendre compte de la première zone, correspondant au léger appui, dans la course de la pédale et donc de connaître l'état du système de régulation automatique d'allure. Il peut par ailleurs garder le pied reposé sur la pédale sans activer le freinage grâce à la force de rappel plus importante associée à la deuxième zone, qui correspond à la fonction de freinage.

Les moyens de détection de la pose du pied du conducteur sur la pédale de frein fournissent un signal mécanique, électrique, optique ou autre, destiné à commander le système de régulation d'allure. Ce signal est pris en compte par des moyens d'élaboration d'un ordre d'activation qui peut être de différents types connus, par exemple analogue à ceux présentés relativement aux figures 1 et 2.

Ainsi, si le mode de régulation choisi par le conducteur, ou encore défini automatiquement en fonction de la vitesse du véhicule est en mode « arrêt-marche » ou « stop-and-go », le véhicule n'est régulé automatiquement que si le conducteur pose son pied sur la pédale de frein équipée du dispositif selon l'invention, dont certaines parties font par exemple partie de la pédale de frein elle-même- La pose du pied par le conducteur déclenche une information qui indique au système de régulation automatique d'allure que la régulation automatique est demandée. Le mode dit de croisière n'utilise par exemple pas cette information, le dispositif selon l'invention étant alors par exemple inhibé. Ce mode de croisière pourrait cependant l'utiliser par exemple en situation de trafic intense ou de conduite jugée dangereuse par le système. Ce pourrait par exemple être le cas lors des nombreuses détections de véhicules, de vitesses relatives importantes, avec un faible temps de réaction demandé. Une indication au tableau de bord peut par exemple également être utile afin d'attirer l'attention du conducteur que le système se trouve dans un mode nécessitant la présence de son pied sur la pédale de frein.

Si le mode « stop-and-go » est sélectionné, et si le conducteur ne pose pas son pied sur la pédale de frein, la régulation automatique n'est alors pas activée par exemple, c'est-à-dire que les gaz sont automatiquement coupés, entraînant une baisse du régime moteur, et un ralentissement du véhicule, événements qui signalent avantageusement au conducteur que le véhicule n'est plus régulé automatiquement en vitesse. Ainsi, l'invention utilise l'appui permanent pour définir l'état activé, ou autorisation, de la régulation du type « stop and go ». D'autre part, un indicateur au tableau de bord peut indiquer en outre l'état du système.

Par ailleurs, en ce qui concerne la sûreté de fonctionnement, l'action de freiner désactive la fonction de régulation automatique du véhicule dans les deux modes. En ce qui concerne le mode « arrêt-marche », après un freinage par appui volontaire sur la pédale de frein, il faut par exemple que le conducteur relâche complètement la pédale de frein, puis repose son pied sur la pédale pour reprendre un mode de régulation automatique.

Un dispositif selon l'invention permet avantageusement de maintenir l'attention du conducteur en éveil. En effet, en mode « arrêt-marche », utilisé principalement en environnement urbain avec un trafic plus intense, le conducteur doit maintenir son pied posé sur la pédale de frein pour conserver un mode de régulation automatique d'allure. Cette action l'oblige à maintenir son attention en éveil.

De plus, le pied posé sur la pédale de frein permet avantageusement de gagner un temps de réaction appréciable, surtout dans des situations non détectables par un radar ou autre capteur servant à la régulation automatique, ou non contrôlable par le système. C'est le cas notamment par suite d'un brusque changement de voie d'un véhicule précédent, par exemple d'une queue de poisson. C'est encore le cas par une irruption soudaine d'un piéton, d'un cycliste ou d'un véhicule traversant la voie. Plus généralement, un gain de temps appréciable est gagné pour toutes les situations visibles par le conducteur, mais difficilement détectables par un système de régulation automatique d'allure.

Par ailleurs, le conducteur s'affranchit avantageusement, notamment en mode « arrêt-marche », de toute commande manuelle pour réactiver la commande automatique d'allure après un freinage, puisque cette réactivation se fait par la pose volontaire du pied sur la pédale de frein. Dans ce cas, la pédale d'accélérateur n'est plus utilisée, ni aucune commande manuelle n'est utile, sauf éventuellement dans le cas d'un ordre d'activation non automatique.

Enfin, l'invention est économique et simple à mettre en oeuvre, dans la mesure notamment où elle ne demande que peu de composants, ni de montages ou de circuits complexes. Elle peut en particulier très bien être adaptée à des chaînes de productions existantes sans surcoûts excessifs.

L'invention permet aussi d'obtenir une réduction des commandes, tout en y rajoutant une surveillance de l'attention du conducteur. On obtient ainsi une simplification des commandes concernant le système tout en accroissant sa sécurité.

## Revendications

1. Dispositif d'activation d'un système de régulation automatique d'allure pour véhicule, caractérisé en ce qu'il comporte des moyens (1, 2, 5, 21) de détection de la pose du pied du conducteur sur la pédale de frein et des moyens d'élaboration d'un ordre d'activation à partir de la détection de la pose du pied du conducteur sur la pédale de frein (3).

2. Dispositif selon la revendication 1, caractérisé en ce que les moyens de détection détectent la pose du pied sur une partie de course de la pédale de frein (3) associée à une force de rappel inférieure à la force de rappel associée à la partie de course de la pédale correspondant à une fonction de freinage.

3. Dispositif selon l'une quelconque des revendications 1 ou 2, caractérisé en ce que les moyens de détection comportent au moins :
- une partie supérieure (1) constituant la surface de pose de la pédale de frein (3) ;
- un support (2) lié rigidement au corps (31) de la pédale de frein, la partie supérieure (1) étant mobile par rapport au support (2) à l'encontre d'une force de rappel inférieure à la force de rappel du corps (31) ;
- un capteur (5) détectant le déplacement relatif de la partie supérieure (1) par rapport au support (2).

4. Dispositif selon la revendication 3, caractérisé en ce qu'un ou plusieurs ressorts de rappel sont disposés entre la partie supérieure (1) et le support (2).

5. Dispositif selon l'une quelconque des revendications 3 ou 4, caractérisé en ce que la partie supérieure (1) a la forme d'une enveloppe se prolongeant perpendiculairement vers le support (2) de façon à guider le mouvement relatif de ce dernier.

6. Dispositif selon l'une quelconque des revendications 1 ou 2, caractérisé en ce que les moyens de détection comportent au moins :
- une chape (21) ayant au moins un degré de liberté en rotation par rapport à la pédale de frein (3), la chape agissant sur la pression du circuit hydraulique de freinage par l'intermédiaire du maître cylindre (30), la chape comportant une butée haute (23) et une butée basse (24) entre lesquelles peut se déplacer la pédale ;
- un capteur détectant le déplacement relatif de la pédale par rapport à la chape.

7. Dispositif selon la revendication 6, caractérisé en ce que la chape comporte un ressort de rappel (25) qui maintient la pédale (3) vers la butée haute (23), la chape étant maintenue vers le haut par un ressort de rappel (27) ayant une force de rappel supérieure.

8. Dispositif selon l'une quelconque des revendications 6 ou 7, caractérisé en ce que le capteur est un commutateur électrique dont le changement d'état est provoqué le déplacement de la chape (21) par rapport à la pédale de frein.

9. Dispositif selon l'une quelconque des revendications 3 à 8, caractérisé en ce que le capteur (5) est du type bouton-poussoir.

10. Dispositif selon l'une quelconque des revendications 3 à 7, caractérisé en ce que le capteur délivre une information proportionnelle au déplacement.

11. Dispositif selon l'une quelconque des revendications 1 ou 2, caractérisé en ce que les moyens de détection comportent un capteur de type commutateur similaire au capteur de témoin de feux stop, se déclenchant par un léger appui de la pédale.
